Europäisches Patentamt

European Patent Office

Office européen des brevets

(19)

(11) Veröffentlichungsnummer: **0 198 317**
**B1**

(12) **EUROPÄISCHE PATENTSCHRIFT**

(45) Veröffentlichungstag der Patentschrift: **08.08.90**

(21) Anmeldenummer: **86104434.5**

(22) Anmeldetag: **01.04.86**

(51) Int. Cl.⁵: **H 02 P 1/26**

(54) Schaltungsanordnung zur Strombegrenzung.

(30) Priorität: **15.04.85 DE 3513421**

(43) Veröffentlichungstag der Anmeldung:
**22.10.86 Patentblatt 86/43**

(45) Bekanntmachung des Hinweises auf die
Patenterteilung:
**08.08.90 Patentblatt 90/32**

(84) Benannte Vertragsstaaten:
**DE FR IT**

(56) Entgegenhaltungen:
**DE-B-1 117 707**
**US-A-3 959 704**

**PATENTS ABSTRACTS OF JAPAN, Band 5, Nr.
82 (E-59)754r, 29. Mai 1981; & JP - A - 56 29 478
IEEE TRANSACTIONS ON INDUSTRY
APPLICATIONS, Band IA-20, Nr. 1,
Januar/Februar 1984, Seiten 46-54, IEEE, New
York, US; F.M. BRUCE et al.: "Reduced-voltage
starting of squirrel-cage induction motors"**

(73) Patentinhaber: **Siemens Aktiengesellschaft
Wittelsbacherplatz 2
D-8000 München 2 (DE)**

(72) Erfinder: **Kölpin, Thomas, Dr.
Marienstrasse 1e
D-8450 Amberg (DE)**

Courier Press, Leamington Spa, England.

## Beschreibung

Die Erfindung bezieht sich auf eine Schaltungsanordnung zur Strombegrenzung bei Wechselstrommaschinen mit Phasenanschnittssteuerung von Halbleitern zum Erreichen eines sanften Anlaufes durch Anhalten der stetigen Verringerung der Zündwinkel bei Auftreten eines vorbestimmten Stromgrenzwertes.

Bei bekannten Schaltungsanordnungen der obengenannten Art (Application Note 1984 der Firma Fairford Electronics Ltd., Großbritannien) wird die stetige Verringerung der Zündwinkel der Leistungshalbleiter, die sogenannte Spannungsrampe, bei Auftreten des Stromgrenzwertes angehalten, bis sich der aufgenommene Strom durch weiteres Beschleunigen der Maschine wieder verringert hat. Eine derartige Strombegrenzung ist bei Drehstromsystemen durch Auswertung des Verlaufs der sechspulsig gleichgerichteten Stromabbilder möglich. Die widersprüchlichen Forderungen, einerseits den Stromaugenblickswert mit sehr kurzer Zeit zu erfassen und andererseits das Steuersignal wegen der diskontinuierlichen Zündung der Leistungshalbleiter ausreichend lange aufrechtzuerhalten, um die gewünschte Stromverringerung zu erreichen, können hier, wenn auch bei relativ hohem Betriebsmittelaufwand, erfüllt werden. Bei einphasiger Anwendung oder Messung ist dagegen die Wahl einer passenden Glättungszeitkonstante kritisch.

Es ist auch bekannt (US—A—3 959 704), die Stromerfassung dreiphasig vorzunehmen. Hierbei sind die drei Phasen über Stromwandler und Bürden, sowie Gleichrichter und ein Glättungsglied zusammengeschaltet.

Bei einer weiterhin bekannten einphasigen Stromerfassung (DE—B—11 17 707) wird der Strom in eine stromproportionale Spannung umgeformt, die ihrerseits mit einem Tachogeneratorsignal zusammengeschaltet ist, wobei jeweils die höhere der beiden Spannungen als Istwert zur Wirkung kommt. Die Abschaltung des Motors erfolgt hier über ein Zeitglied.

Der vorliegenden Erfindung liegt somit die Aufgabe zugrunde, eine Schaltungsanordnung der obengenannten Art zu schaffen, die bei einphasiger Messung ohne erheblichen Aufwand ähnlich gute Strombegrenzungen erreicht. Dies wird durch den Gegenstand der Erfindung auf einfache Weise dadurch erzielt, daß bei einphasiger Erfassung des Laststromes Mittel zur Erfassung eines Augenblicksgrenzwertes des Betrages des Laststromes und zur Nachtriggerung des Stromgrenzwertsignals vorgesehen sind. Als vorteilhaft hat sich herausgestellt, wenn die ersteren Mittel aus einem Schwellwertdetektor und die letzteren Mittel aus einer nachtriggerbaren, monostabilen Kippstufe (Monoflop) bestehen. Derartige Schwellwertdetektoren und monostabile Kippstufen sind aus Tietze, Schenk "Halbleiter-Schaltungstechnik", Berlin, Heidelberg, New York, 1974, 3. Auflage, S. 296 ff und S. 305) bekannt. Wird die Ablaufzeit der Kippstufe größer als eine Halbschwingzeit der Netzspannung gewählt, so ist gewährleistet, daß die Verringerung des Zündwinkels solange angehalten wird, bis der Laststrom sich soweit verringert hat, daß sein zeitlicher Verlauf stets unter dem eingestellten Grenzwert liegt.

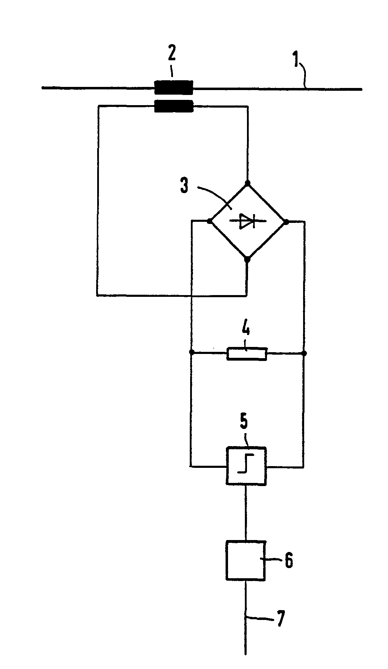

Anhand der Zeichnung wird ein Ausführungsbeispiel der erfindungsgemäßen Anordnung dargestellt. Die eigentliche Phasenanschnittsteuerung für Wechselstromverbraucher ist in der Zeichnung nicht dargestellt; sie ist jedoch aus Application Note 1984 der Firma Fairford Electronics Ltd., Großbritannien, bekannt.

Der in der Leitung 1 zum Wechselstromverbraucher fließende Strom wird über den Stromwandler 2 erfaßt, über einen Gleichrichter 3 gleichgerichtet und auf eine Bürde 4 geschaltet. Es handelt sich hier um eine zweipulsige Gleichrichtung. Der Schwellwertdetektor 5 ist einstellbar und erfaßt den Augenblickswert des Betrages des in der Leitung 1 fließenden Laststromes. Das durch den Schwellwertdetektor ermittelte Signal wird auf das nachtriggerbare Monoflop 6 aufgeschaltet. Die Ablaufzeit dieses Monoflops ist größer als eine Halbschwingzeit der Netzspannung. Das hieraus entnehmbare Stromgrenzwertsignal 7 kann als Stromgrenzwertmeldung benutzt werden oder direkt zum Anhalten der Verringerung des Zündwinkels der Leistungshalbleiter benutzt werden.

## Patentansprüche

1. Schaltungsanordnung zur Strombegrenzung bei Wechselstrommaschinen mit Phasenanschnittsteuerung von Halbleitern zum Erreichen eines sanften Anlaufes durch Anhalten der stetigen Verringerung der Zündwinkel bei Auftreten eines vorbestimmten Stromgrenzwertes, dadurch gekennzeichnet, daß bei einphasiger Erfassung des Laststromes Mittel (2, 3, 4, 5) zur Erfassung eines Augenblicksgrenzwertes des Betrages des Laststromes und zur Nachtriggerung (6) des Stromgrenzwertsignals vorgesehen sind.

2. Schaltungsanordnung nach Anspruch 1, dadurch gekennzeichnet, daß die ersteren Mittel aus einem Schwellwertdetektor (5) bestehen.

3. Schaltungsanordnung nach Anspruch 1, dadurch gekennzeichnet, daß die letzteren Mittel aus einer (nachtriggerbaren monostabilen Kippstufe (6) bestehen.

4. Schaltungsanordnung nach Anspruch 3, dadurch gekennzeichnet, daß die Ablaufzeit der Kippstufe (6) größer als eine Halbschwingzeit der Netzspannung ist.

## Revendications

1. Montage pour limiter le courant dans des machines à courant alternatif avec une commande à découpage de phase de semiconducteurs pour l'obtention d'un démarrage en douceur au moyen d'un arrêt de la réduction permanente de l'angle d'amorçage lors de l'apparition d'une valeur limite prédéterminée du courant,

2

caractérisé par le fait que, dans le cas de la détection monophasée du courant de charge, il est prévu des moyens (2, 3, 4, 5) servant à détecter une valeur limite instantanée du courant de charge et à redéclencher (6) le signal de valeur limite du courant.

2. Montage suivant la revendication 1, caractérisé par le fait que les premiers moyens sont constitués par un détecteur à valeur de seuil (5).

3. Montage suivant la revendication 1, caractérisé par le fait que les derniers moyens sont constitués par un étage à bascule monostable redéclenchable (6).

4. Montage suivant la revendication 3, caractérisé par le fait que la durée du cycle de l'étage à bascule (6) est supérieure à la durée d'une alternance de la tension du secteur.

**Claims**

1. A circuit arrangement for current limiting in alternating current machines with phase control by semi-conductors for obtaining smooth starting by stopping the constant reduction of the ignition angle when a predetermined current limiting value occurs, characterised in that with a single-phase detection of the load current, means (2, 3, 4, 5) are provided for detecting an instantaneous limiting value of the amount of the load current and for retriggering (6) the current limiting signal.

2. A circuit arrangement according to claim 1, characterised in that the first means consist of a threshold value detector (5).

3. A circuit arrangement according to claim 1, characterised in that the latter means consist of a retriggerable monostable flip-flop (6).

4. A circuit arrangement according to claim 3, characterised in that the operating time of the flip-flop (6) is greater than half of one cycle period of the system voltage.